# EUROPÄISCHE PATENTSCHRIFT

(11) **EP 0 641 092 B1**
(45) Veröffentlichungstag und Bekanntmachung des Hinweises auf die Patenterteilung: **19.12.2001**
(21) Anmeldenummer: 94111413.4
(22) Anmeldetag: 21.07.1994
(51) Int. Cl.: H04B 5/00, G08C 17/04

(54) **Datenübertragungssystem**
Data transmission system
Système de transmission de données

(30) Priorität: 27.08.1993 DE 4328913
(43) Veröffentlichungstag der Anmeldung: 01.03.1995
(73) Patentinhaber: Infineon Technologies AG, 81669 München (DE)
(72) Erfinder: Reiner,Robert,Dipl.-Ing., D-82008 Unterhaching (DE)
(74) Vertreter: Westphal, Klaus, Dipl.-Ing.

(56) Entgegenhaltungen:
- WO-A-88/03687
- US-A- 3 427 614
- US-A- 5 144 299

## Beschreibung

Die Erfindung betrifft ein Datenübertragungssystem für ein Schlüssel-Schloss-System.

Derartige Datenübertragungssysteme finden insbesondere im Kfz-Bereich bei Schlüssel-Schloss-Systemen Verwendung. Sie können aber auch bei Chipkartensystemen zum Einsatz kommen.

Aus der DE 34 02 331 ist z.B. ein derartiges System bekannt. Dort wird eine Vorrichtung zur gegenseitigen Informationsübertragung zwischen elektronischen Schloss und Schlüssel unter Verwendung von jeweils einer Spule beschrieben, wobei ein vom Schloss periodisches ausgesendetes Signal durch den Schlüssel empfangen wird. Dieser sendet unter Aktivierung einer im Schlüssel enthaltenen Schlüsselelektronik ein kodiertes Informationssignal an das Schloss. Zur Datenübertragung bedämpft der Schlüssel das von dem Schloss ausgesandte Signal je nach zu übertragender Information. Im Schloss kann diese Bedämpfung mittels eines Komparators erkannt werden und daraus die entsprechende Information dekodiert werden.

Der Schlüssel entzieht also dem magnetischen Wechselfeld, das durch die Spule des Schlosses aufgebaut wird, mehr oder weniger Energie und moduliert so die Amplitude auf der Schlossseite. Dabei treten grundsätzlich folgende Nachteile auf:

Der Schlüssel kann nicht durchweg bei Leistungs-Anpassung betrieben werden. Er muss während der Übertragung durch die Modulation zur Leistungsanpassung hin und deutlich davon weggesteuert werden.

Die Leistungsanpassung ist abhängig von der Kopplung zwischen Schloss und Schlüssel. Man kann z.B. nicht für alle Spulen und Abstände mit dem gleichen Arbeitspunkt arbeiten, weil sonst die Modulation unwirksam sein könnte.

Auf der Schlossseite ist die Amplitudenmodulation schwierig zu demodulieren, da der Träger zum Beispiel mit 50 Volt Amplitude auftritt, während die Änderung der Amplitude durch die Modulation nur einige Millivolt beträgt. Die Demodulation erfordert diskret aufgebaute Schaltungsteile, weil die Spannung für integrierte Schaltungen direkt am Schwingkreis zu hoch ist und Spannungsteiler auch die geringe Modulation dämpfen.

In der WO 88/03687 ist ein Datenübertragungssystem bestehend aus einer ersten Einheit und einer zweiten Einheit beschrieben, die über einen Übertrager kontaktlos miteinander gekoppelt sind. Die erste Einheit weist eine Steuereinheit zur Ansteuerung der Übertragerspule auf und versorgt darüber hinaus die zweite Einheit mit Energie. Die zweite Einheit weist Mittel zur Phasenmodulation auf. In der WO 88/03687 ist jedoch kein Datenübertragungssystem für ein Schlüssel-Schloss-System offenbart, welches eine als stationäre und bewegliche Einheit ausgestaltete erste und zweite Einheit aufweist. Darüber hinaus ist mit dem Datenübertragungssystem der WO 88/03687 (stationärseitig) keine Entkoppelung der Phasen- und/oder Amplitudenmodulation bzw. -Demodulation möglich.

In der US 3,427,614 ist ein Datenübertragungssystem mit einem kontaktlosen Übertrager beschrieben, der dazu ausgelegt ist, Daten und Energie von einer ersten Einheit zu einer zweiten Einheit zu übertragen. Die zweite Einheit weist Mittel zur Phasenmodulation auf, welche als steuerbares Schaltelement sowie dazu in Reihe geschaltete Kapazität ausgebildet sind.

In der US 5,144,299 ist ein System beschrieben, bei dem das von einer ersten Einheit gesendete Signal amplitudenmoduliert wird und in dem nach Maßgabe der aufmodulierten Daten in einer zweiten Einheit Steuerungen vorgenommen werden.

Aufgabe der vorliegenden Erfindung ist es, ein Datenübertragungssystem anzugeben, welches die vorstehenden Nachtteile beseitigt.

Diese Aufgabe wird durch ein Datenübertragungssystem für ein Schlüssel-Schloss-System mit den Merkmalen des Patentanspruchs 1 gelöst. Eine vorteilhafte Weiterbildung ist Gegenstand des einzigen Unteranspruchs.

Die Erfindung wird nachfolgend anhand einer Figur näher erläutert.

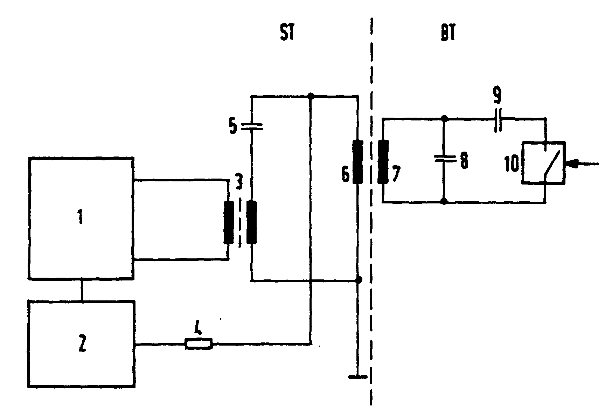

Es zeigt
Figur 1 eine erfindungsgemäße Anordnung eines Datenübertragungssystems.

Mit ST ist ein stationärer Teil z.B. ein Schloß dargestellt. BT zeigt den Teil einer beweglichen Einheit, z.B. eines Schlüssels, der zur Datenübertragung dient. Dabei ist derjenige Teil nicht dargestellt, der zum Generieren der Versorgungsspannung für die bewegliche Einheit aus der von der Spule 7 empfangenen Energieschwingung notwendig ist.

Mit 1 ist eine Steuereinheit dargestellt, die den Generator zur Schwingungserzeugung beinhaltet. Daran angeschlossen ist ein Übertrager 3 dessen erster Übertragungskreis mit der Steuereinheit 1 verbunden ist. Der zweite Übertragungskreis bildet über eine Reihenschaltung eines Kondensators 5 und einer Übertragungsspule 6 mit dem zweiten Kreis des Übertragers 3 ein Schwingkreis. Der Knotenpunkt der Übertragungsspule 6 sowie der Spule des Übertragers 3 ist mit Masse verbunden. Der Knotenpunkt zwischen Kapazität 5 und Übertragungsspule 6 ist über einen Widerstand 4 mit dem Eingang eines Phasendemodulators 2 verschaltet. Der Phasendemodulator 2 ist wiederum mit der Steuereinheit 1 gekoppelt.

Im beweglichen Teil ist parallel zur Übertragungsspule 7 eine Kapazität 8 geschaltet. Desweiteren ist die Übertragungsspule 7 über eine weitere Kapazität 9 mit einem steuerbaren Halbleiterschalter 10 verbunden. Der andere Anschluß des steuerbaren Halbleiterschalters 10 ist mit dem anderen Anschluß der Übertragungsspule 7 verschaltet. Der steuerbare Halbleiterschalter 10 weist einen Steuereingang auf, an dem die zu übertragenden Daten zugeführt werden können.

Durch wahlweises zusätzliches Parallelschalten der weiteren Kapazität 9 zur Kapazität 8 über den steuerbaren Halbleiterschalter 10 wird nicht die Belastung moduliert, sondern die Phase. Statt einer Modulation des Wirkwiderstands auf der Schlüsselseite erfolgt nun die Modulation eines Blindwiderstands. Dies geschieht, wie in Figur 1 gezeigt, durch Zuschalten von Kapazitäten zum Schwingkreis auf der Schlüsselseite. Auch andere Phasenmodulatoren sind selbstverständlich möglich.

Dabei ergeben sich folgende Vorteile:

Der Schlüssel kann bei Leistungsanpassung betrieben werden.

Der Arbeitspunkt, z.B. um die Resonanzabstimmung herum, kann für alle Abstände und Spulenformen gleich bleiben.

Auf der Schloßseite kann mit relativ einfachen integrierten Schaltungen die Phase leicht demoduliert werden. Dabei ist die Referenz durch die Ansteuerung der Sendestufe gegeben, wobei die hohe Spannung am Schwingkreis mit einfachen Vorwiderständen, z.B. kapazitiven oder ohmschen Vorwiderständen, auf integrierte schaltkreisverträgliche Spannungen herabgesetzt werden kann, ohne an Phasenmodulation zu verlieren.

Theoretisch kann auch die Phasenmodulation auf dem Weg vom Schlüssel zum Schloß gleichzeitig mit einer Amplitudenmodulation auf dem Weg vom Schloß zum Schlüssel angewendet werden. Praktisch funktioniert das jedoch nur bei sehr engen Kopplungen, die im Anwendungsfall kaum jemals vorliegen.

## Patentansprüche

1. Datenübertragungssystem für ein Schlüssel-Schloss-System,
(a) mit einer stationären Einheit (ST),
(b) mit einer beweglichen Einheit (BT),
(c) mit jeweils einer in der stationären Einheit (ST) und in der beweglichen Einheit (BT) angeordneten Übertragungsspule (6, 7) zur kontaktlosen Daten- und Energieübertragung, wobei die stationäre Einheit (ST) die bewegliche Einheit (BT) über die Übertragungsspulen (6, 7) mit Energie versorgt und wobei die bewegliche Einheit (BT) Mittel zur Phasenmodulation (9; 10) der von der stationären Einheit (ST) übertragenen Energieschwingung aufweist und die stationäre Einheit (ST) Mittel zur Phasendemodulation (2) der Energieschwingung enthält,
(d) mit einer in der stationären Einheit (ST) angeordneten Steuereinheit (1) zur Ansteuerung der stationärseitigen Übertragungsspule (6),
(e) wobei das Mittel zur Phasenmodulation (9; 10) ein steuerbares Schaltelement (10) sowie eine dazu in Reihe geschaltete Kapazität (9) aufweist, wobei diese Reihenschaltung parallel zur Übertragungsspule der beweglichen Einheit (7) geschaltet ist, und
(f) wobei die stationäre Einheit (ST) einen Übertrager (3) aufweist, dessen einer Kreis mit der Steuereinheit (1) verbunden ist und dessen anderer Kreis mit der Übertragungsspule (6) verbunden ist.

2. Datenübertragungssystem nach Anspruch 1,
**dadurch gekennzeichnet,**
**daß** die stationäre Einheit (ST) Mittel zur Amplitudenmodulation der Energieschwingung aufweist und daß die bewegliche Einheit (BT) Mittel zur Amplitudendemodulation der Energieschwingung aufweist.

## Claims

1. A data transmission system for a key-lock system
(a) with a stationary unit (ST),
(b) with a movable unit (BT),
(c) with one transmission coil (6, 7) disposed in the stationary unit (ST) and one in the movable unit (BT) for the contactless transmission of data and energy, the stationary unit (ST) supplying the movable unit (BT) with energy via the transmission coils (6, 7) and the movable unit (BT) comprising means for the phase modulation (9; 10) of the energy vibration transmitted from the stationary unit (ST) and the stationary unit (ST) containing means for the phase modulation (2) of the energy vibration,
(d) with a control unit (1) disposed in the stationary unit (ST) for controlling the transmission coil (6) on the stationary side,
(e) wherein the means for the phase modulation (9; 10) comprise a controllable switching component (10) and also a capacitor (9) connected in series with it, this series connection being connected parallel to the transmission coil of the movable unit, and
(f) wherein the stationary unit (ST) comprises a transformer (3), the one circuit of which is connected to the control unit (1) and the other circuit of which is connected to the transmission coil (6).

2. A data transmission system according to Claim 1,
**characterised in that** the stationary unit (ST) comprises means for the amplitude modulation of the energy vibration **and in that** the movable unit (BT) comprises means for the amplitude modulation of the energy vibration.

## Revendications

1. Système de transmission de données pour un système clé/serrure comprenant
a) une unité fixe (ST)
b) une unité mobile (BT)
c) une bobine de transmission (6, 7) prévue respectivement dans l'unité fixe (ST) et dans l'unité mobile (BT) pour la transmission sans contact de données et d'énergie, l'unité fixe (ST) alimentant en énergie l'unité mobile (BT) par les bobines de transmission (6, 7), l'unité mobile (BT) comportant des moyens de modulation de phases (9, 10) de l'énergie d'oscillation transmise par l'unité fixe (ST) et l'unité fixe (ST) comportant des moyens de démodulation de phase (2) de l'oscillation d'énergie,
d) une unité de commande (1) dans l'unité fixe (ST) pour commander la bobine de transmission (6) du côté fixe,
e) le moyen de modulation de phase (9, 10) étant un élément de commutation (10) commandé ainsi qu'une capacité (9) branchée en série sur celui-ci, le montage en série étant lui-même branché en parallèle à la bobine de transmission (7) de l'unité mobile, et
f) l'unité fixe (ST) comportant un transformateur (3) dont un circuit est relié à l'unité de commande (1) et l'autre circuit est relié à la bobine de transmission (6).

2. Système de transmission de données selon la revendication 1,
**caractérisé en ce que**
l'unité fixe (ST) comporte des moyens de modulation d'amplitude de l'oscillation d'énergie et l'unité mobile (BT) comporte des moyens de démodulation d'amplitude de l'oscillation d'énergie.
